# EUROPÄISCHE PATENTANMELDUNG

(11) **EP 1 445 742 A1**
(43) Veröffentlichungstag der Anmeldung: **11.08.2004**
(21) Anmeldenummer: 04002148.7
(22) Anmeldetag: 30.01.2004
(51) Int. Cl.: G07F 7/06, G06K 7/10, G06K 5/00, G06K 19/06

(54) **Identifizierungsvorrichtung**

(30) Priorität: 31.01.2003 DE 10303913
(71) Anmelder: QUISS GMBH, 82178 PUCHHEIM (DE)
(72) Erfinder: Raab, Roman, D-81827 München (DE); Weisheit, Kenneth, D-86391 Stadtbergen (DE)
(74) Vertreter: Kunz, Herbert, Dr.

(57) **Zusammenfassung**

Die vorliegende Erfindung betrifft eine Vorrichtung zum Erkennen und Verändern eines Identifikationsmerkmals auf einem zu identifizierenden Produkt, welche dadurch gekennzeichnet ist, dass eine Erkennungseinheit, die das Identifikationsmerkmal auf dem Produkt lokalisiert, sowie ein Energieübertragungsmittel vorgesehen ist, mit dem in einer thermochromen Substanz des Identifikationsmerkmals eine Farbänderung des Identifikationsmerkmals vorgenommen wird.

## Beschreibung

Die Erfindung betrifft eine Vorrichtung zum Erkennen und Verändern eines Identifikationsmerkmals auf einem zu identifizierenden Produkt gemäß Oberbegriff von Anspruch 1.

Im folgenden wird die Aufgabe, die der Erfindung zugrunde liegt, anhand eines praktischen Beispiels aus dem Wirtschaftsalltag erläutert. Es sei aber darauf hingewiesen, dass die Erfindung keineswegs auf dieses Beispiel für eine Anwendungsmöglichkeit beschränkt ist.

Bekanntlich sind aus Umweltschutzgründen nun auch Getränkedosen mit einem Pfand belegt, was den Verbraucher dazu bringen soll, die geleerten Dosen, beispielsweise Bierbüchsen oder Limonadendosen, beim Verkäufer oder bei Sammelstellen unter Rückzahlung des Pfandes zurückzugeben. Dadurch soll der Dosenabfall verringert und die Wiederverwendung des Dosenmaterials, beispielsweise nach entsprechender Auftrennung, erleichtert werden.

Aufgrund der allgemein hohen Personalkosten bietet sich natürlich an, die Rücknahme der Dosen und die Rückzahlung des Pfandes über einen entsprechenden Automaten vorzunehmen. Dies wird in vielen Supermärkten im Falle von Pfandflaschen aus Glas auch schon so gehandhabt. Ein grundsätzliches Problem ist dabei aber, dass der Automat erkennen muss, ob es sich um eine pfandberechtigte Flasche handelt oder nicht. Darüber hinaus soll natürlich sichergestellt werden, dass Rückgaben nicht vorgetäuscht oder mehrfach vorgenommen werden. Grundsätzlich lässt sich dieses Problem durch Anbringen von entsprechenden Pfandmarkierungen, beispielsweise auf dem Flaschenetikett, die der Rücknahmeautomat erkennen kann, lösen. Nach der Rücknahme kann die Markierung, beispielsweise das Etikett, zur Pfandentwertung entfernt oder zerstört werden, um eine wiederholte Pfandrückzahlung auszuschließen.

Getränkedosen werden auf dem Markt stark nachgefragt, so dass sie schnell und in entsprechend hohen Stückzahlen produziert werden müssen. Es dürfte ohne weiteres verständlich sein, dass an einer Pfandmarkierung, die bei voller Produktionsgeschwindigkeit auf die Dose aufgebracht werden kann, ausreichend fälschungssicher ist, bei der Rückgabe von einer einfachen Vorrichtung erkannt und entfernbar oder veränderbar ist, so dass eine wiederholte Pfandrückzahlung verhindert wird, großes wirtschaftliches Interesse besteht. Hieraus ergibt sich unmittelbar die Aufgabe der Erfindung.

Erfindungsgemäß wird eine Vorrichtung zum Erkennen und Verändern eines Identifikationsmerkmals auf einem zu identifizierenden Produkt bereitgestellt, die dadurch gekennzeichnet ist, dass eine Erkennungseinheit, die das Identifikationsmerkmal auf dem Produkt lokalisiert, sowie ein Energieübertragungsmittel vorgesehen ist, mit dem in einer thermochromen Substanz des Identifikationsmerkmals eine Farbänderung des Identifikationsmerkmals vorgenommen wird.

Ein Vorteil der erfindungsgemäßen Vorrichtung, wenn diese beispielsweise in einem Pfanddosenrücknahmeautomaten verwendet wird, besteht darin, dass ohne Anwendung mechanischer oder chemischer Verfahren, einfach durch Energieübertragung, schnell, zuverlässig und ohne die Dose zerstören zu müssen, eine darauf aufgebrachte Pfandmarkierung, zerstört oder so verändert werden kann, dass der Rücknahmeautormat bei einem wiederholten Rückgabeversuch erkennt, dass das Pfand bereits entwertet ist. Es sei nochmals darauf hingewiesen, dass dies nur ein Anwendungsbeispiel ist und nicht zur Beschränkung der Erfindung, wie sie in den Patentansprüchen definiert ist, dienen soll.

Die Erfindung betrifft ferner die Verwendung der erfindungsgemäßen Vorrichtung, wie in Patentanspruch 10 definiert, und das in Patentanspruch 11 definierte erfindungsgemäße Verfahren.

Weitere vorteilhafte und/oder bevorzugte Ausführungsformen der Erfindung sind Gegenstand der Unteransprüche.

Bei einer Ausführungsform der erfindungsgemäßen Vorrichtung ist ferner ein Beleuchtungsmodul zum Beleuchten des Identifikationsmerkmals, eine Vergleichseinheit zum Vergleichen der Farbe des Identifikationsmerkmals vor und nach der Farbänderung, eine Auswerteeinheit zum Festlegen, ob die vorbestimmte Farbänderung eingetreten ist, und/oder eine Ausgabeeinheit zur Ausgabe eines Steuersignals vorgesehen, welche vorzugsweise in der Erkennungseinheit integriert sind. Besonders vorteilhaft befindet sich diese Ausführungsform der Erfindung in einem kompakten Gehäuse. In weiterer vorteilhafter Ausgestaltung der erfindungsgemäßen Vorrichtung weist die Auswerteeinheit ein Speicherelement auf, mit dem Zustände des Identifikationsmerkmals vor und nach der Farbänderung gespeichert werden, und/oder einen Logikbaustein, vorzugsweise eine logische "Und"-Verknüpfung.

Bei einer weiteren vorteilhaften Ausführungsform der erfindungsgemäßen Vorrichtung ist ferner ein Filtersystem, beispielsweise ein Lichtfiltersystem, vorzugsweise ein Farbfiltersystem und/oder ein Polarisationsfiltersystem vor der Erkennungseinheit vorgesehen, um Störsignale und Hintergrundemissionen, beispielsweise durch direkt einfallendes Sonnenlicht, die das Erkennen nachteilig beeinflussen könnten, auszublenden. Die Erkennungseinheit kann beispielsweise eine Fotodiode, ein Farbsensor oder eine Videokamera sein. Eine Videokamera hat den Vorteil, dass aufgrund des großen Sichtfeldes der zweidimensional erfassenden CCD-Sensor-Matrix, verglichen mit der nur punktuell und eindimensional erfassenden Fotodiode, keine genaue Positionierung des Identifikationsmerkmals in Bezug auf die Erkennungseinheit erforderlich ist. Vorzugsweise wird eine Farbvideokamera verwendet. Grundsätzlich bestehen weder für die Fotodiode, den Farbsensor oder die Videokamera besondere Anforderungen, so dass handelsübliche Typen bzw. Modelle verwendet werden können. Im Falle einer Schwarz-Weiß-Videokamera wird vorzugsweise in diese ein Farbfilter oder Farbfiltersystem eingesetzt, um Störsignale und Hintergrundemissionen auszublenden. Die Verwendung des bereits oben erwähnten Beleuchtungsmoduls hat den Vorteil, dass unabhängig von den Umgebungsbedingungen die Erkennung des Identifikationsmerkmals auf dem Produkt stets gleiche Ergebnisse liefert. Vorteilhafterweise werden in dem Beleuchtungsmodul als Leuchtmittel Leuchtdioden eingesetzt, weil diese wartungsarm sind und sich während des Betriebs nicht erhitzen. Das Beleuchtungsmodul kann mit der Erkennungseinheit und den restlichen Einheiten der Vorrichtung in einem besonders kompakten Gehäuse kombiniert werden, wenn es die Erkennungseinheit kranzförmig umgibt, so dass das Sichtfeld der Erkennungseinheit in der Öffnung liegt.

Im folgenden wird das Identifikationsmerkmal detaillierter erläutert. Dieses kann eine beliebige Form und Größe haben. Beispielsweise kann es punktförmig, strichförmig oder flächenförmig sein. Selbstverständlich können auch mehrere Identifikationsmerkmale angebracht werden. Im Falle von mehreren Identifikationsmerkmalen ist es auch möglich, damit Informationen zu codieren, die mit der Erkennungseinheit ausgelesen werden können. Beispielsweise kann ein Strich- bzw. Barcode oder ein zweidimensionaler Code als Informationsträger daraus gebildet werden.

Für bestimmte Anwendungsmöglichkeiten der erfindungsgemäßen Vorrichtung ist es vorteilhaft, wenn die durch das oben erwähnte Energieübertragungsmittel vorgenommene Farbänderung des Identifikationsmerkmals irreversibel ist. Eine derartige irreversible Farbänderung lässt sich beispielsweise mit thermochromen Substanzen erzielen. Thermochrome Substanzen sind allgemein Substanzen, deren Eigenfärbung temperaturabhängig ist. Innerhalb geringer Temperaturgrenzen erfolgen Farbwechsel, z. B. von farbig zu farblos oder umgekehrt oder auch ein Wechsel zwischen zwei Farben. Geeignete thermochrome Substanzen oder Farben sind beispielsweise in Blau, Gelb und Rot von der Firma Michael Huber München GmbH zu beziehen. Es handelt sich dabei um mikroverkapselte flüssigkristalline Chromophore. Vorzugsweise ist die Farbänderung irreversibel. Beispielsweise ist von dieser Firma eine thermochrome Farbe beziehbar, die im Temperaturbereich von 160°C bis 180°C ihre Farbe irreversibel von gelb nach rot ändert, vgl. dazu die Broschüre "Druckfarben- und Lacktechnologien im Verpackungsdruck" (MB119 (0,25.05.01 )), herausgegeben von der Huber-Gruppe, (Abschnitt "Brand Protection System®", Seiten 4, 5 und 11 von Michael Keinert und Abschnitt "Spezialeffekte für besondere Verpackungen", Seite 7, von Ursula Borgmann).

Es folgt eine Beschreibung von erfindungsgemäß geeigneten irreversibel thermochromen Farben. Diese sind Gegenstand einer deutschen Patentanmeldung gleichen Datums der Firma Michael Huber München GmbH.

Geeignete Farben zum Bedrucken oder Beschichten von z. B. Getränkedosen enthalten Bindemittel, die auf den Substratoberflächen wie Aluminium, Stahlblech, Polyester (PET) oder Kunststoff- und Papieretiketten ausreichend haften, sowie irreversibel thermochrome Latentpigmente. Derartige Farbmittel sind chemisch so aufgebaut, dass die chromophoren Partikel solubilisierende Gruppen enthalten. Diese bewirken Löslichkeit in bestimmten Lösemitteln oder Lösemittelkombinationen, wie sie beispielsweise in Druckfarben enthalten sein können.

Durch Einwirkungen von Temperaturen im Bereich von beispielsweise 180 bis 200°C werden die solubilisierenden Gruppen deblockiert, was zu einem unlöslichen Nanopigment-Primärpartikel mit anderer Färbung führt.

Die Funktion latenter Pigmente ist u.a. beschrieben in der Zeitschrift PPCJ, October 1998, Seite 38 (Z. Hao et.al., Ciba Speciality Chemicals Inc., Basel, CH), sowie US Patent No. 6,160,037 "Reactive Extrusion of Latent Pigments".

In den Druckfarben und Beschichtungssystemen werden Latentpigmente durch Dispergieraggregate wie Dissolver, Dreiwalzwerke oder Kugelmühlen dispergiert. Anwendungen in disperser Form mit Partikelgrößen < 2 µm ergeben sich beispielsweise für Offsetdruckfarben auf Basis konventioneller oder UV-Strahlungshärtender Bindemittel. Siebdruck-, Inkjet-, Flexo- oder Tiefdruckfarben können, abhängig von den enthaltenen Lösemitteln, die Latentpigmente gelöst, d.h. in Form eines hochmolekularen Farbstoffes enthalten.

Nach flächiger oder partieller Hitzeeinwirkung auf Drucke, die > 10 % der beschriebenen Pigmente enthalten, entsteht eine visuell deutlich erkennbare Farbänderung durch Deblockierung der Latentpigmente, was im Falle des Vorliegens als Farbstoff zu einem optimal verteilen Nanopigment führt. Diese Pigmente weisen, wie Pigmente generell, deutlich bessere Echtheiten, speziell Lichtechtheiten, auf als Farbstoffe.

Die Lichtechtheit von Farbstoffen beträgt nach DIN 16 525 maximal ca. WS 3; die von Pigmenten > WS 4.

### Beispiele für Druckfarben mit irreversibel thermochromen Latentpigmenten

### 1. Offsetfarbe

12 bis 20 % Latentpigment Irgaphor Red 502A oder Magenta VG-531 von Ciba Speciality Chemicals werden unter intensivem Rühren mit einem Dissolver und anschließender Homogenisierung auf einem Dreiwalzwerk in ein Bindemittel, bestehend aus nachfolgenden Komponenten eingearbeitet:

| | |
|---|---|
| Resol-Kolophonium-Harz -Typ Tergraf UZ 87 | 20 % (Cray Valley) |
| Maleinatharz Alresat VKM 1396 | 10 % (Akzo) |
| Leinölalkyd Terlon 5 | 20 % (Eastman Chemicals) |
| Mineralöl PKWF 28/31 | 35 % (Haltermann) |
| Leinöl | 15 % |

Weitere Zusätze: Kobalt/Mangan-Sikkative, Wachse

Die resultierende gelbe Druckfarbe wird auf eine Zügigkeit (Prüfbau Inkomat - 25°C) von 12 ± 2 eingestellt und weist eine Viskosität von 800 ± 300 dPa.s auf.

### 2. Irreversibel thermochrome Flexofarbe (wasserbasiert)

| | | |
|---|---|---|
| 15 % | Latentpigment Irgaphor Red 502A | |
| 55 % | Styrol-Acrylat-Dispersion Joncryl 74 | (Johnson Polymers) |
| 25 % | Wachsdispersion Vestowax | (Clariant) |
| 2 % | Entschäumer Byk 094 | (Byk Chemicals) |
| 2 % | Netzmittel Byk 190 | (Byk Chemicals) |
| 1 % | Konservierungsmittel Proxel BD | (Ceneca) |

Die Farbe hat bei der Verarbeitung eine Viskosität (Auslaufzeit DIN-Becher 4 mm ⌀) von 25 - 35 Sekunden.

### 3. Irreversibel thermochrome Flexofarbe (lösemittelbasiert)

| | | |
|---|---|---|
| 15 % | Latentpigment Irgaphor Red 502A | |
| 10 % | Nitrocellulose Walocel A 300 | (Wolff Cellulosics) |
| 10 % | Nitrocellulose Walocel A 400 | (Wolff Cellulosics) |
| 35 % | Ethanol | |
| 17 % | Ethylacetat | |
| 5 % | Weichmacher ATBC (Acetyltributylcitrat) | |
| 1 % | Entschäumer Polydimethylsiloxan | (Wacker Chemie) |
| 5 % | Ethoxypropanol | (Biesterfield) |
| 2 % | Mikrowachs Luwax AF 30 | (BASF) |

Die Farbe hat bei Verarbeitung eine Viskosität (Auslaufzeit DIN-Becher 4 mm ⌀) von 25 - 35 Sekunden.

### 4. Irreversibel thermochrome Flexofarbe (lösemittelbasiert)

| | | |
|---|---|---|
| 15 % | Latentpigment Irgaphor Red 502A | |
| 35 % | Polyvinylbutyral Pioloform BL 16 | (Wacker Chemie) |
| 39 % | Ethanol | |
| 2 % | Luwax AF 30 | (BASF) |
| 3 % | ATBC | |
| 1 % | Entschäumer Polydimethylsiloxan | |
| 5 % | Ethoxypropanol | |

Die Farbe hat bei Verarbeitung eine Viskosität (Auslaufzeit DIN-Becher 4 mm ⌀) von 25 - 35 Sekunden.

### 5. Irreversibel thermochrome Tiefdruckfarbe (lösemittelbasiert)

| | | |
|---|---|---|
| 15 % | Latentpigment Irgaphor Red 502A | |
| 25 % | Pioloform BL 16 | (Wacker Chemie) |
| 52 % | Ethanol | |
| 2 % | Luwax AF30 | |
| 2 % | ATBC | |
| 1 % | Entschäumer Polydimethylsiloxan | |
| 3 % | Ethoxypropanol | |

Die Farbe hat eine Verarbeitungsviskosität (Auslaufzeit DIN-Becher 4 mm ⌀) von 15 - 25 Sekunden.

### 6. Irreversibel thermochrome Inkjet-Tinte

| | |
|---|---|
| 10 % Latentpigment Irgaphor Red 502A | |
| 43 % Pioloform BL 16 | |
| 46,4 % Ethanol | |
| 0,5 % Entschäumer Tego Airex 900 | (Degussa-Tego) |
| 0,1 % Aerosil 200 | (Degussa) |

Die Farbe hat eine Viskosität von 4 - 8 mPa.s bei einer Auslaufzeit DIN-Becher 3 mm ⌀ von 19 - 23 Sekunden.

Das zur Farbänderung verwendete Energieübertragungsmittel unterliegt an sich keinen besonderen Beschränkungen. Beispielsweise kann ein Stempel verwendet werden, der z. B. durch Induktion erhitzt wird, oder ein Laser einer geeigneten Leistungsklasse. Auch Mikrowellen, Infrarotlicht, Ultraschall oder eine Gasflamme eignen sich. Der Fachmann wählt entsprechend den praktischen Gegebenheiten aus.

Bei einer weiteren Ausführungsform der erfindungsgemäßen Vorrichtung führt das Energieübertragungsmittel flächenmäßig oder strukturiert eine Farbänderung in dem Identifikationsmerkmal durch. Eine strukturierte Farbänderung in dem Identifikationsmerkmal kann zum Codieren von Informationen verwendet werden. Beispielsweise kann die thermochrome Substanz oder Farbe in Form einer beliebigen Fläche auf ein Produkt aufgebracht werden, worauf dann mit Hilfe beispielsweise eines Lasers Farbänderungen herbeigeführt werden, so dass sich Symbole, Zeichen, geometrische Formen oder Ziffern ergeben. Es können auch Strich- oder Barcodes oder zweidimensionale Codes gebildet werden.

Bei einer weiteren Ausführungsform der erfindungsgemäßen Vorrichtung weist die Erkennungseinheit eine Sensoreinheit auf, die unterschiedliche Farben erkennt.

Von einer Wiederholung des Wortlauts der Verfahrensansprüche wird hier abgesehen, da sich die einzelnen Verfahrensmerkmale aus dem Betrieb der erfindungsgemäßen Vorrichtung ergeben bzw. in den Ansprüchen deutlich definiert sind. Statt dessen soll zur weiteren Veranschaulichung der Erfindung, ohne diese in irgendeiner Weise zu beschränken, deren Anwendung in einem Pfanddosenrücknahmeautomaten beschrieben werden.

Die Pfanddosen werden mit einer Markierung aus einer thermochromen Farbe, beispielsweise in Form eines Punktes versehen. Als thermochrome Farbe wird beispielsweise die oben beschriebene, im Bereich von 160°C bis 180°C von gelb nach rot wechselnde Farbe der Firma Michael Huber München GmbH verwendet. Die Markierung kann eine beliebige Form und eine beliebige Größe aufweisen und wird vorzugsweise direkt während der Produktion bei voller Produktionsgeschwindigkeit mit Hilfe von Direktdruckverfahren auf die Dosen aufgebracht, und zwar vorzugsweise auf deren Boden. Dies hat den Vorteil, dass die Dosen in diesem Falle nicht gedreht werden müssen, und außerdem ist die Materialstärke am Boden der Dosen am höchsten. Es sei darauf hingewiesen, dass natürlich auch andere Druckverfahren angewendet werden können, beispielsweise Aufspritzen mit Inkjet oder Dispensereinheit, Tampondruck oder Siebdruck. Im Falle von kleinen Dosenmengen kann die Markierung zunächst auch auf ein Etikett aufgebracht werden, das dann auch die Dose geklebt wird.

Zur Rückgabe wird die Dose in einen Rücknahmeautomaten eingeführt, der die erfindungsgemäße Vorrichtung aufweist. Die Erkennungseinheit, beispielsweise eine Farbvideokamera prüft die Anwesenheit der Markierung. Zu diesem Zeitpunkt befindet sich die oben erwähnte thermochrome Farbe noch im Grundzustand, d. h. ist gelb. Wegen des großen Sichtfeldes der zweidimensional erfassenden Videokamera ist eine genaue Positionierung der Markierung zur Erkennung nicht erforderlich. Die Videokamera befindet sich in einem kompakten Gehäuse und ist kranzförmig mit Beleuchtungsmitteln umgeben, beispielsweise Leuchtdioden. Durch die Ausleuchtung der Markierung kann deren Zustand unabhängig von den Umgebungsbedingungen stets mit dem gleichen Ergebnis erfasst werden.

Erforderlichenfalls können Störsignale und Hintergrundemissionen durch entsprechende Filter ausgeblendet werden. Geeignet sind beispielsweise sogenannte Doppelbandfilter oder Zweikantenfilter. Wird festgestellt, dass die Markierung gelb ist, d. h. oben erwähnte thermochrome Farbe befindet sich noch im Grundzustand, wird die Dose als pfandberechtigt erkannt. Als nächstes wird der Pfand entwertet und die Dose als "zurückgenommen" gekennzeichnet, indem beispielsweise mit einem entsprechend ausgestalteten Stempel, der beispielsweise durch eine Induktionsheizung erhitzt werden kann, oder mit Hilfe eines Laser geeigneter Leistungsklasse, beispielsweise 10 Watt, die Markierung erhitzt wird, um eine Farbänderung der Markierung zu bewirken. Der hier verwendete thermochrome Farbstoff der Firma Michael Huber München GmbH ändert beim Erhitzen auf eine Temperatur im Bereich von 160°C bis 180°C seine Farbe von gelb nach rot. Diese Farbänderung wird von der Farbvideokamera erkannt. Dann wird geprüft, ob die durch den Übergang von gelb nach rot definierte Farbänderung eine bestimmte Wellenlängendifferenz zwischen gelb und rot aufweist. Liegt diese bestimmte Wellenlängendifferenz vor, gilt die Entwertung des Pfandes als erfolgt und es wird ein Signal erzeugt, das den weiteren Ablauf in dem Rücknahmeautomaten steuert, d. h. die Dose wird akzeptiert und das Pfand ausbezahlt. Durch die Entwertung ist es nicht mehr erforderlich, die Dose zu zerstören, z. B. zu shreddern oder zu kompaktieren.

Da die Farbänderung bei der verwendeten thermochromen Farbe irreversibel ist, sind wiederholte Pfandrückzahlungen nicht möglich. Wird eine Dose mit entwerteter, d. h. roter, Markierung in den Rücknahmeautomaten gegeben, wird dies erkannt und die betreffende Dose entweder nicht angenommen oder nach der Annahme das Pfand nicht zurückgezahlt.

Insbesondere bei Verwendung eines Lasers können durch eine punktuell oder lokal hervorgerufene Farbänderung beliebige Strukturen, vorzugsweise zur Codierung von Informationen in Form von Zahlen, Zeichen und Symbolen auf der Markierung gebildet werden. Beispiele sind Angaben zum Verkaufsort, Getränkeart, Verfallsdatum oder sonstige Informationen, die eine Materialanalyse ermöglichen. Die Identifizierung des Codes und das Auslesen der Informationen erfolgt z. B. mit der bereits erwähnten Videokamera und entsprechender Auswertungssoftware.

## Patentansprüche

1. Vorrichtung zum Erkennen und Verändern eines Identifikationsmerkmals auf einem zu identifizierenden Produkt,
**dadurch gekennzeichnet, dass**
eine Erkennungseinheit, die das Identifikationsmerkmal auf dem Produkt lokalisiert, sowie
ein Energieübertragungsmittel vorgesehen ist, mit dem in einer thermochromen Substanz des Identifikationsmerkmals eine Farbänderung des Identifikationsmerkmals vorgenommen wird.

2. Vorrichtung nach Anspruch 1, wobei ferner ein Beleuchtungsmodul zum Beleuchten des Identifikationsmerkmals, eine Vergleichseinheit zum Vergleichen der Farbe des Identifikationsmerkmals vor und nach der Farbänderung, eine Auswerteeinheit zum Festlegen, ob die vorbestimmte Farbänderung eingetreten ist, und/oder eine Ausgabeeinheit zur Ausgabe eines Steuersignals vorgesehen ist, welche vorzugsweise in der Erkennungseinheit integriert sind.

3. Vorrichtung nach Anspruch 2, wobei die Auswerteeinheit ein Speicherelement, mit dem die Zustände des Identifikationsmerkmals vor und nach der Farbänderung gespeichert werden, und/oder einen Logikbaustein, vorzugsweise eine logische "Und"-Verknüpfung, aufweist.

4. Vorrichtung nach einem der Ansprüche 1 bis 3, wobei ein Filtersystem, vorzugsweise ein Farbfiltersystem und/oder ein Polarisationsfiltersystem vorgesehen ist.

5. Vorrichtung nach einem der Ansprüche 1 bis 4, wobei die Erkennungseinheit eine Fotodiode, ein Farbsensor oder eine Videokamera ist.

6. Vorrichtung nach einem der Ansprüche 1 bis 5, wobei das Identifikationsmerkmal eine irreversible Farbänderung aufweist.

7. Vorrichtung nach einem der Ansprüche 1 bis 6, wobei das Energieübertragungsmittel, vorzugsweise ein Stempel oder Laser, die Farbänderung mittels einer thermischen Energieübertragung herbeiführt.

8. Vorrichtung nach einem der Ansprüche 1 bis 7, wobei das Energieübertragungsmittel flächenmäßig oder strukturiert eine Farbänderung in dem Identifikationsmerkmal herbeiführt.

9. Vorrichtung nach einem der Ansprüche 1 bis 8, wobei die Erkennungseinheit eine Sensoreinheit aufweist, die unterschiedliche Farben erkennt.

10. Verwendung der Vorrichtung nach einem der Ansprüche 1 bis 9 als Rücknahmeeinrichtung zur Rücknahme von identifizierten Produkten, vorzugsweise Dosen.

11. Verfahren zum Erkennen und zum Verändern eines ldentifikationsmerkmals auf einem zu identifizierenden Produkt, insbesondere zur Anwendung mittels einer Vorrichtung nach einem der Ansprüche 1 bis 9, welches folgende Schritte aufweist:
a) Bereitstellen einer Erkennungseinheit, die das Identifikationsmerkmal auf dem Produkt lokalisiert, sowie
b) Bereitstellen eines Energieübertragungsmittels, mit dem in einer thermochromen Substanz des Identifikationsmerkmals eine Farbänderung des Identifikationsmerkmals vorgenommen wird.

12. Verfahren nach Anspruch 11, wobei das Identifikationsmerkmal mittels eines Direktdruckverfahrens auf das Produkt, vorzugsweise flächig, strukturiert und/oder punktförmig, aufgebracht wird.

13. Verfahren nach einem der Ansprüche 11 oder 12, wobei die Farbänderung durch Einbringung von thermischer Energie, vorzugsweise mittels eines erwärmten Stempels oder Lasers, in dem Identifikationsmerkmal erfolgt.

14. Verfahren nach einem der Ansprüche 11 bis 13, wobei das Identifikationsmerkmal mit thermischer Energie größer gleich 60 Grad Celsius, vorzugsweise im Bereich zwischen 60 und 200 Grad Celsius, vorzugsweise im Bereich zwischen 160 und 180 Grad Celsius, für die Farbänderung beaufschlagt wird.

15. Verfahren nach einem der Ansprüche 11 bis 14, wobei die Farbänderung irreversibel durchgeführt wird.

16. Verfahren nach einem der Ansprüche 11 bis 15, wobei das Identifikationsmerkmal auf einem Klebstreifen bzw. Label aufgebracht wird.

17. Verfahren nach einem der Ansprüche 11 bis 16, wobei geprüft wird, ob die durch Übergang von einem ersten Farbe zu einer zweiten Farbe definierte Farbänderung eine bestimmte Wellenlängendifferenz zwischen der ersten Farbe und der zweiten Farbe aufweist.

18. Verfahren nach Anspruch 17, wobei bei Vorliegen der bestimmten Wellenlängendifferenz ein Steuersignal erzeugt wird.

19. Verfahren nach einem der Ansprüche 11 bis 18, wobei die Farbänderung vor und nach dem thermischen Energieübertragung registriert wird.

20. Verfahren nach einem der Ansprüche 11 bis 19, wobei
a) das Identifikationsmerkmal flächig auf das Produkt aufgebracht ist, und
b) in das Identifikationsmerkmal durch thermischen Energieübertrag eine Struktur aufgrund der Farbänderung markiert wird.

21. Verfahren nach einem der Ansprüche 11 bis 20, wobei durch flächigen thermischen Energieübertrag das Identifikationsmerkmal aufgrund der Farbänderung als Deaktivierung registriert wird.
